(19) Europäisches Patentamt / European Patent Office / Office européen des brevets

(11) **EP 4 428 611 A1**

(12) # EUROPEAN PATENT APPLICATION

(43) Date of publication:
**11.09.2024  Bulletin 2024/37**

(21) Application number: **23172333.9**

(22) Date of filing: **09.05.2023**

(51) International Patent Classification (IPC):
**G03B 11/04** *(2021.01)*   **G02B 13/00** *(2006.01)*
**G03B 17/17** *(2021.01)*   **G03B 30/00** *(2021.01)*
**G02B 5/04** *(2006.01)*

(52) Cooperative Patent Classification (CPC):
**G03B 17/17; G02B 13/0065; G03B 11/045;
G03B 30/00;** G02B 5/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **24.02.2023  US 202363448211 P**

(71) Applicant: **Largan Precision Co. Ltd.
Taichung City (TW)**

(72) Inventors:
• **Tung, Wei-Che
 Taichung City (TW)**

• **Chang, Lin An
 Taichung City (TW)**
• **CHOU, Ming-Ta
 Taichung City (TW)**
• **LIN, Cheng-Feng
 Taichung City (TW)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **OPTICAL IMAGING MODULE, CAMERA MODULE AND ELECTRONIC DEVICE**

(57)     An optical imaging module (11) includes an imaging lens assembly (111), an optical path folding element (112), and a light-blocking element (113). The imaging lens assembly (111) includes at least one optical lens element (1111). The optical path folding element (112) is disposed at an image side of the imaging lens assembly (111), and the optical path folding element (112) has a light incident surface (1121), a light exiting surface (1122), and at least one optical reflective surface (1123a). The light-blocking element (113) is disposed opposite to the at least one optical reflective surface (1123a), and the light-blocking element (113) includes an interval area (1131) that maintains a distance from the optical path folding element (112). The at least one optical reflective surface (1123a) is an optical total reflection surface configured to totally internally reflect imaging light of the optical imaging module (11) in the optical path folding element (112). The interval area (1131) of the light-blocking element (113) and the optical total reflection surface form an air slit (AL) therebetween.

FIG. 3

## Description

## BACKGROUND

Technical Field

The present disclosure relates to an optical imaging module, a camera module and an electronic device, more particularly to an optical imaging module and a camera module applicable to an electronic device.

Description of Related Art

With the development of technology, featuring high image quality becomes one of the indispensable features of an optical system nowadays. Furthermore, electronic devices equipped with optical systems are trending towards multi-functionality for various applications, and therefore the functionality requirements for the optical systems have been increasing.

However, conventional optical systems are difficult to meet the requirement of high optical quality of an electronic device under diversified development in recent years, especially image quality which would be easily affected due to non-imaging light (e.g., stray light) in a lens. The conventional configuration inside a lens is prone to generate non-imaging stray light due to light transmission at reflective surfaces, and therefore it is difficult to meet progressive market requirements in optical quality nowadays. Therefore, how to improve the configuration inside a lens to prevent generating non-imaging stray light for meeting the requirement of high-end-specification electronic devices is an important topic in this field nowadays.

## SUMMARY

According to one aspect of the present disclosure, an optical imaging module includes an imaging lens assembly, an optical path folding element, and a light-blocking element. The imaging lens assembly includes at least one optical lens element. The optical path folding element is disposed at an image side of the imaging lens assembly, and the optical path folding element has a light incident surface, a light exiting surface, and at least one optical reflective surface. The light-blocking element is disposed opposite to the at least one optical reflective surface of the optical path folding element, and the light-blocking element includes an interval area that maintains a distance from the optical path folding element. The at least one optical reflective surface is an optical total reflection surface that is configured to totally internally reflect imaging light of the optical imaging module in the optical path folding element. The interval area of the light-blocking element and the optical total reflection surface form an air slit therebetween.

According to another aspect of the present disclosure, an optical imaging module includes an imaging lens assembly, an optical path folding element, and a light-blocking element. The imaging lens assembly includes at least one optical lens element. The optical path folding element is disposed at an image side of the imaging lens assembly, and the optical path folding element has a light incident surface, a light exiting surface, and at least one optical reflective surface. The light-blocking element is disposed opposite to the at least one optical reflective surface of the optical path folding element, and the light-blocking element includes an interval area that maintains a distance from the optical path folding element. The light-blocking element further includes a fixed area. An adhesive member is disposed on the fixed area, and the adhesive member is configured to fix the light-blocking element to the optical path folding element. The interval area of the light-blocking element and the at least one optical reflective surface of the optical path folding element form an air slit therebetween.

According to another aspect of the present disclosure, an optical imaging module includes an imaging lens assembly, an optical path folding element, and a light-blocking element. The imaging lens assembly includes at least one optical lens element. The optical path folding element is disposed at an image side of the imaging lens assembly, and the optical path folding element has a light incident surface, a light exiting surface, and at least one optical reflective surface. The light-blocking element is disposed opposite to the at least one optical reflective surface of the optical path folding element, and the light-blocking element includes an interval area that maintains a distance from the optical path folding element. The interval area of the light-blocking element and the at least one optical reflective surface of the optical path folding element form an air slit therebetween. When a width of the air slit is d, the following condition is satisfied: $0.002 \, [mm] < d < 0.10 \, [mm]$.

According to another aspect of the present disclosure, a camera module includes one of the aforementioned optical imaging modules and an image sensor, wherein the image sensor is disposed on an image surface of the optical imaging module.

According to another aspect of the present disclosure, an electronic device includes the aforementioned camera module.

## BRIEF DESCRIPTION OF THE DRAWINGS

The disclosure can be better understood by reading the following detailed description of the embodiments, with reference made to the accompanying drawings as follows:

Fig. 1 is a perspective view of an optical imaging module according to the 1st embodiment of the present disclosure;
Fig. 2 is an exploded view of the optical imaging module of Fig. 1;
Fig. 3 is a cross-sectional view of the optical imaging module of Fig. 1 that is mounted inside a camera module;

Fig. 4 is an enlarged view of AA region of the optical imaging module of Fig. 3;

Fig. 5 is a bottom view of the optical imaging module of Fig. 1;

Fig. 6 is a front view of a light-blocking element of the optical imaging module of Fig. 5 that is combined with an adhesive member;

Fig. 7 is a perspective view of an optical imaging module according to the 2nd embodiment of the present disclosure;

Fig. 8 is a front view of a light-blocking element of the optical imaging module of Fig. 7 that is combined with an adhesive member;

Fig. 9 is a front view of a light-blocking element according to the 3rd embodiment of the present disclosure that is combined with an adhesive member;

Fig. 10 is a front view of a light-blocking element according to the 4th embodiment of the present disclosure that is combined with an adhesive member;

Fig. 11 is a front view of a light-blocking element according to the 5th embodiment of the present disclosure that is combined with an adhesive member;

Fig. 12 is a cross-sectional view of a camera module according to the 6th embodiment of the present disclosure;

Fig. 13 is an enlarged view of BB region of an optical imaging module of the camera module of Fig. 12;

Fig. 14 is an exploded view of the optical imaging module of the camera module of Fig. 12;

Fig. 15 is a front view of a light-blocking element of the optical imaging module of Fig. 14 that is combined with an adhesive member;

Fig. 16 is a cross-sectional view of a camera module according to the 7th embodiment of the present disclosure;

Fig. 17 is a front view of a light-blocking element of an optical imaging module of the camera module of Fig. 16;

Fig. 18 is one perspective view of an electronic device according to the 8th embodiment of the present disclosure;

Fig. 19 is another perspective view of the electronic device in Fig. 18;

Fig. 20 is an image captured by an ultra-wide-angle camera module;

Fig. 21 is an image captured by a high pixel camera module;

Fig. 22 is an image captured by a telephoto camera module;

Fig. 23 is one perspective view of an electronic device according to the 9th embodiment of the present disclosure;

Fig. 24 is a perspective view of an electronic device according to the 10th embodiment of the present disclosure;

Fig. 25 is a side view of the electronic device in Fig. 24; and

Fig. 26 is a top view of the electronic device in Fig. 24.

## DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The present disclosure provides an optical imaging module that can have an optical axis, and the optical imaging module includes an imaging lens assembly, an optical path folding element, and a light-blocking element.

The imaging lens assembly includes at least one optical lens element.

The optical path folding element is disposed at an image side of the imaging lens assembly. The optical path folding element has a light incident surface, a light exiting surface, and at least one optical reflective surface. Moreover, a high-reflective coating can be used for reflecting imaging light so as to enable the at least one optical reflective surface. Moreover, the phenomenon of total internal reflection can also be used for reflecting imaging light so as to enable the at least one optical reflective surface. Specifically, the at least one optical reflective surface can be an optical total reflection surface that is configured to totally internally reflect imaging light of the optical imaging module in the optical path folding element. Moreover, the optical path folding element can have an optical reflective surface using a high-reflective coating and an optical reflective surface where the total internal reflection occurs, simultaneously.

The optical axis of the optical imaging module can travel through the light incident surface, the light exiting surface, and the at least one optical reflective surface of the optical path folding element. The optical axis of the optical imaging module is deflected at the at least one optical reflective surface, such that the traveling direction of light along the optical axis can be changed by the optical path folding element. Therefore, it is favorable for reducing the size of the optical imaging module, such that the optical imaging module can be applicable to a telephoto imaging system.

The light-blocking element can be a light-blocking sheet, a light-blocking plate, etc., and the present disclosure is not limited thereto. The light-blocking element and the at least one optical reflective surface of the optical path folding element are disposed opposite to each other.

The light-blocking element includes an interval area that maintains a distance from the optical path folding element. The interval area and the at least one optical reflective surface of the optical path folding element can form an air slit therebetween. Moreover, the air slit can also be applicable to the optical reflective surface where the total internal reflection occurs to reflect imaging light. Moreover, the light-blocking element and the optical path folding element can physically abut on each other. Therefore, it is favorable for maintaining the distance between the light-blocking element and the optical path folding element by the abutting manner thereof, so that the abovementioned configuration where the light-blocking element and the at least one optical reflective surface of the optical path folding element are disposed opposite to each other can be achieved; and it is also favorable for controlling size accuracy so as to maintain the distance between the interval area and the optical reflective surface.

The air slit can be in air communication with outside at a position where the light-blocking element is located close to the light exiting surface. Therefore, it is favorable for keeping specific light-blocking conditions while maintaining high optical quality.

With the arrangement of the light-blocking element and its corresponding components, it is favorable for blocking specific stray light, so that the total optical quality can be improved. Also, with the air slit between the interval area and the at least one optical reflective surface, it is favorable for improving blocking efficiency and protecting reflection effect of the at least one optical reflective surface.

The light-blocking element can further include a fixed area. An adhesive member can be disposed on the fixed area, and the adhesive member is configured to fix the light-blocking element to the optical path folding element. By using the adhesive member, it is favorable for effectively maintaining the stability of the width of the air slit. Moreover, the adhesive member can be colloid, glue, thermosetting adhesive, optical curable adhesive, pressure curable adhesive, etc., and the present disclosure is not limited thereto. Moreover, the light-blocking element can also be adhered to the optical path folding element through the adhesive member so as to achieve the abovementioned configuration where the light-blocking element and the at least one optical reflective surface are disposed opposite to each other. Moreover, the air slit may not be sealed by any medium other than the adhesive member at a position where the light-blocking element is close to the light exiting surface, so that the air communication between the air slit and the outside can be achieved.

The light-blocking element can further include a cut opening. The cut opening can be an open notch or a closed hole, and the present disclosure is not limited thereto. The cut opening can correspond to the at least one optical reflective surface, and the cut opening can be connected to the interval area. Therefore, it is favorable for avoiding high-intensity non-imaging light at specific area of the light-blocking element.

When a width of the air slit is d, the following condition can be satisfied: 0.002 [mm] < d < 0.10 [mm].

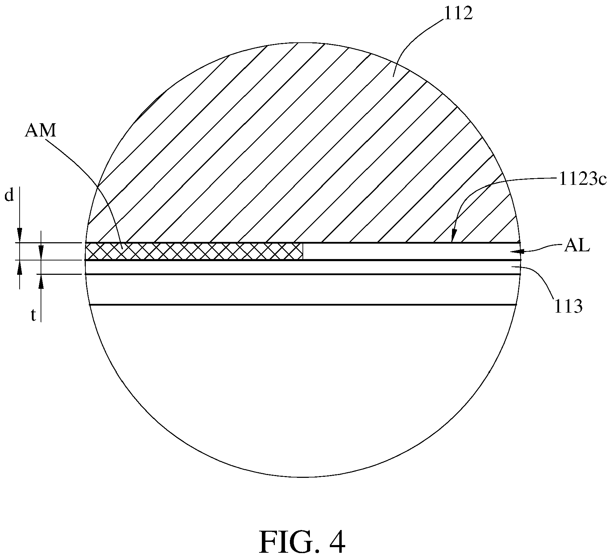

Therefore, it is favorable for preventing the light-blocking element and the optical path folding element from being detached. Moreover, the following condition can also be satisfied: 0.005 [mm] < d < 0.07 [mm]. Therefore, the thickness of the optical imaging module is favorable for mass-producing the optical imaging module. Moreover, the following condition can also be satisfied: 0.007 [mm] < d < 0.04 [mm]. Therefore, it is favorable for reducing the possibility of generation of non-imaging light. Please refer to Fig. 4, which shows a parameter d according to the 1st embodiment of the present disclosure.

When the width of the air slit is d, and a thickness of the light-blocking element is t, the following condition can be satisfied: 0.03 < d/t < 7.50. Therefore, it is favorable for breaking specific route of stray light. Moreover, the following condition can also be satisfied: $0.03 < d/t \leq 3.11$. Please refer to Fig. 4, which shows parameters d and t according to the 1st embodiment of the present disclosure.

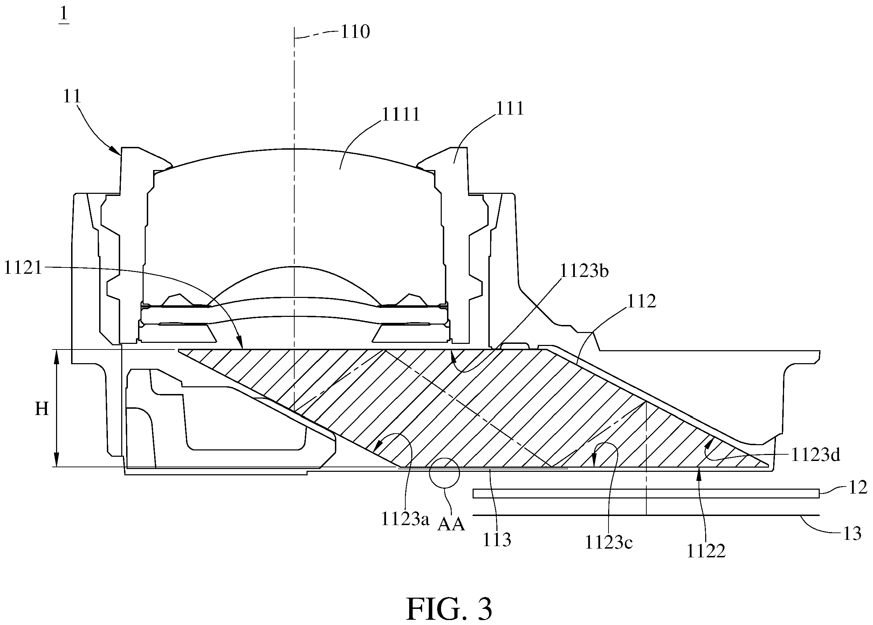

When a height of the optical path folding element along a direction of the optical axis of the optical imaging module is H, the following condition can be satisfied: 1 [mm] < H < 5 [mm]. Therefore, it is favorable for providing feasibility of miniaturization of the optical imaging module. Please refer to Fig. 3, which shows a parameter H according to the 1st embodiment of the present disclosure.

When an area of the light-blocking element corresponding to the air slit is Aa, and a total area of the light-blocking element is As, the following condition can be satisfied: 0.10 < Aa/As < 0.90. Therefore, it is favorable for keeping a relatively high light-blocking efficiency. Moreover, the following condition can also be satisfied: 0.15 < Aa/As < 0.85. Therefore, it is favorable for providing relatively good imaging quality and efficiently blocking stray light. Moreover, the following condition can also be satisfied: $0.25 \leq Aa/As \leq 0.75$.

When an area of the fixed area of the light-blocking element coated with the adhesive member is Ab, and the total area of the light-blocking element is As, the following condition can be satisfied: 0.05 < Ab/As < 0.65. Therefore, it is favorable for providing a relatively high assembly efficiency. Moreover, the following condition can also be satisfied: 0.10 < Ab/As < 0.60. Therefore, it is favorable for obtaining a proper balance between light-blocking efficiency and product reliability.

The present disclosure provides a camera module that include the abovementioned optical imaging module and an image sensor disposed on an image surface of the optical imaging module.

The present disclosure provides an electronic device that include the abovementioned camera module.

According to the present disclosure, the aforementioned features and conditions can be utilized in numerous combinations so as to achieve corresponding effect.

According to the above description of the present disclosure, the following specific embodiments are provided for further explanation.

### 1st Embodiment

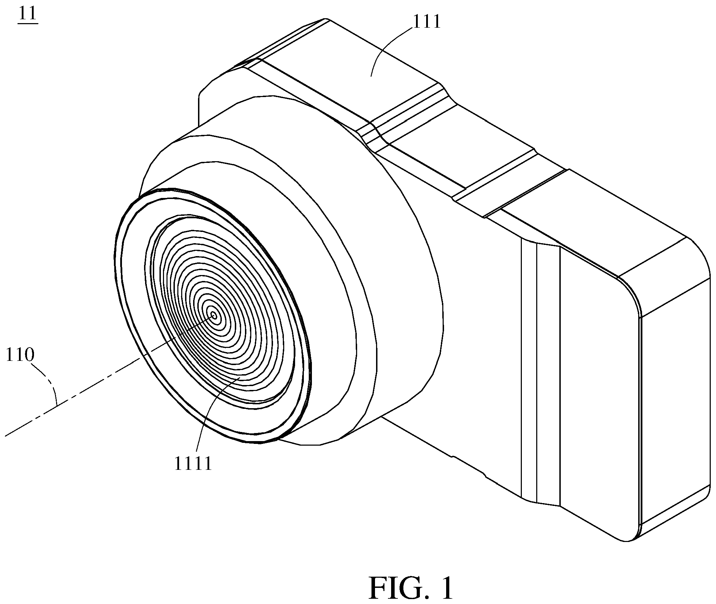

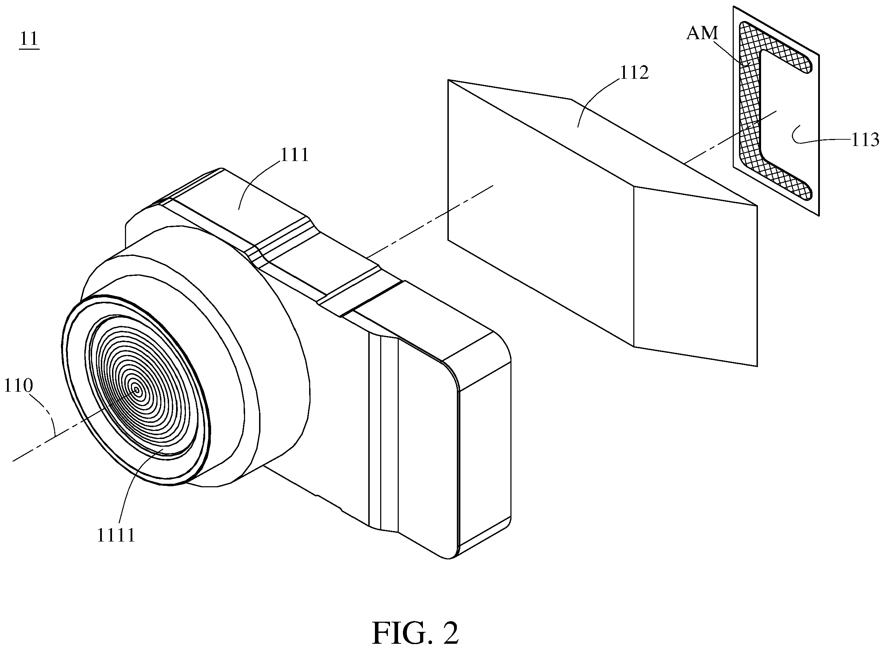

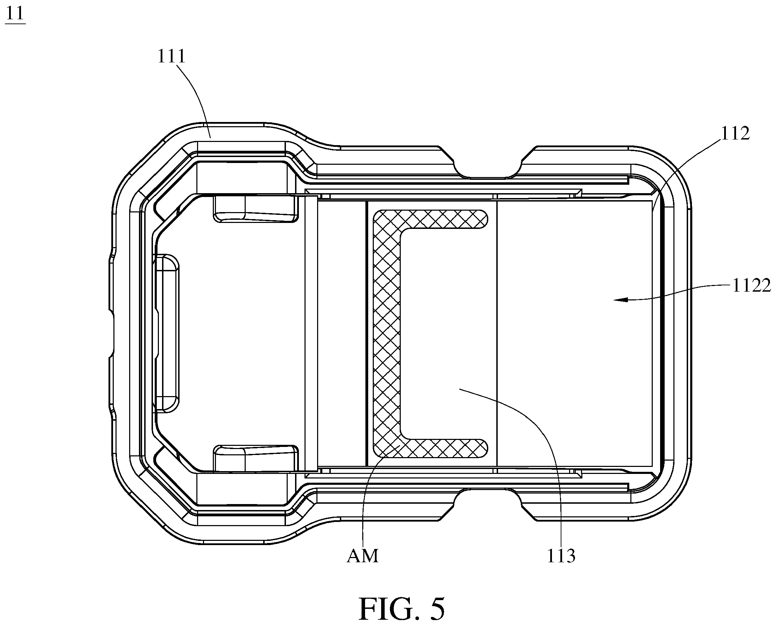

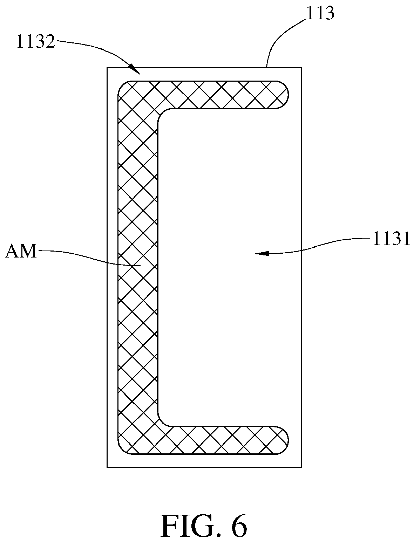

Please refer to Fig. 1 to Fig. 6, where Fig. 1 is a perspective view of an optical imaging module according to the 1st embodiment of the present disclosure, Fig. 2 is an exploded view of the optical imaging module of Fig. 1, Fig. 3 is a cross-sectional view of the optical imaging module of Fig. 1 that is mounted inside a camera module, Fig. 4 is an enlarged view of AA region of the optical imaging module of Fig. 3, Fig. 5 is a bottom view of the optical imaging module of Fig. 1, and Fig. 6 is a front view of a light-blocking element of the optical imaging module of Fig. 5 that is combined with an adhesive member.

The present embodiment provides a camera module 1 including an optical imaging module 11, a filter 12 and an image sensor 13. The filter 12 is disposed between the optical imaging module 11 and the image sensor 13. The image sensor 13 is disposed on an image surface (not numbered) of the optical imaging module 11. The optical imaging module 11 has an optical axis 110 and includes an imaging lens assembly 111, an optical path folding element 112 and a light-blocking element 113.

The imaging lens assembly 111 includes at least one optical lens element 1111. Please be noted that the features of the imaging lens assembly 111, such as the number and the shape of the at least one optical lens element 1111, are not intended to restrict the present disclosure, and thus the profile of the at least one optical lens element 1111 is only partially depicted in the drawings for preventing obscuring the present disclosure.

The optical path folding element 112 is disposed at an image side of the imaging lens assembly 111. The optical path folding element 112 has a light incident surface 1121, a light exiting surface 1122, and four optical reflective surfaces 1123a, 1123b, 1123c, 1123d. The optical reflective surfaces 1123a and 1123d include, for example, high-reflective coatings for reflecting imaging light, and the optical reflective surfaces 1123b and 1123c are, for example, optical total reflection surfaces for totally internally reflecting imaging light. As such, the optical axis 110 can travel through the at least one optical lens element 1111 and the light incident surface 1121 of the imaging lens assembly 111 then to be deflected four times sequentially at the optical reflective surfaces 1123a, 1123b, 1123c, 1123d, and then the optical axis 110 can exit the optical imaging module 11 from the light exiting surface 1122 to reach the image sensor 13 via the filter 12.

The light-blocking element 113 and the optical reflective surface 1123c of the optical path folding element 112 are disposed opposite to each other. The light-blocking element 113 includes an interval area 1131 and a fixed area 1132. The interval area 1131 maintains a distance from the optical path folding element 112, and the interval area 1131 and the optical reflective surface 1123c of the optical path folding element 112 form an air slit AL therebetween. In the fixed area 1132, there is an adhesive member AM disposed thereon for fixing the light-blocking element 113 to the optical path folding element 112 and providing physical abutting between the light-blocking element 113 and the optical path folding element 112. Further, the air slit AL is not sealed by any medium other than the adhesive member AM at a position where the light-blocking element 113 is close to the light exiting surface 1122 so as to be in air communication with outside.

When a width of the air slit AL is d, and a thickness of the light-blocking element 113 is t, the following conditions are satisfied: d = 0.028 [mm]; t = 0.023 [mm]; and d/t = 1.217.

When a height of the optical path folding element 112 along a direction of the optical axis 110 of the optical imaging module 11 is H, the following condition is satisfied: H = 2.724 [mm].

When an area of the light-blocking element 113 corresponding to the air slit AL is Aa, an area of the fixed area 1132 of the light-blocking element 113 coated with the adhesive member AM is Ab, and a total area of the light-blocking element 113 is As, the following conditions are satisfied: Aa = 18.39 $[mm^2]$; Ab = 8.79 $[mm^2]$; As = 31.34 $[mm^2]$; Aa/As = 0.587; and Ab/As = 0.280.

### 2nd Embodiment

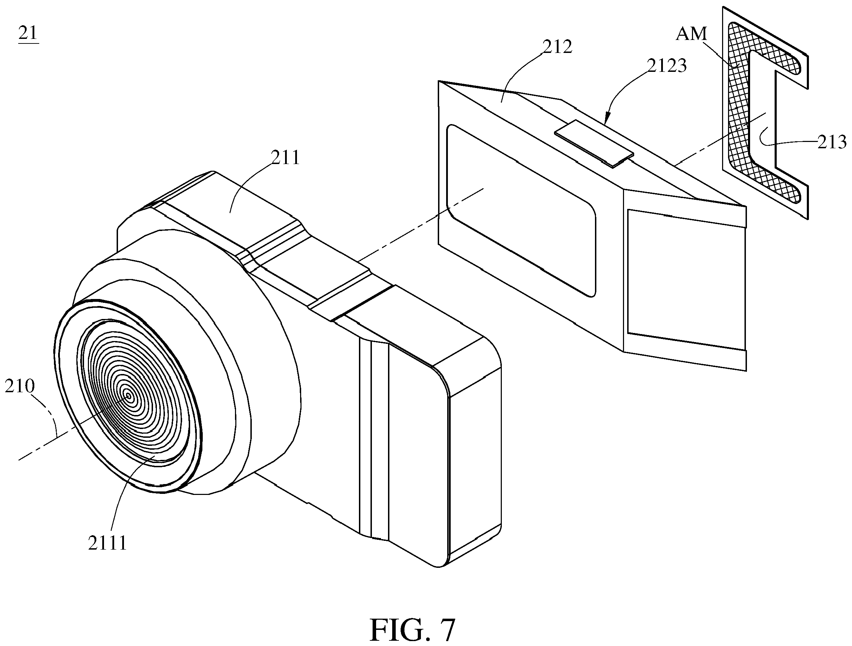

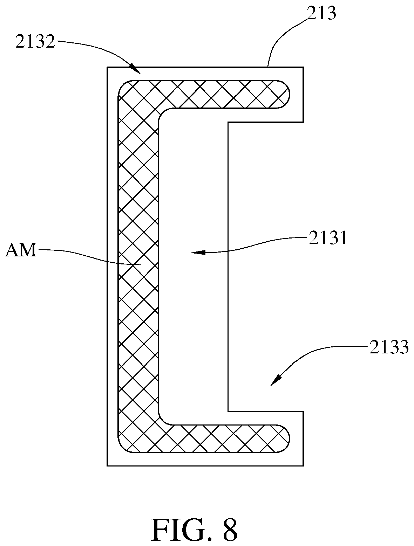

Please refer to Fig. 7 to Fig. 8, where Fig. 7 is a perspective view of an optical imaging module according to the 2nd embodiment of the present disclosure, and Fig. 8 is a front view of a light-blocking element of the optical imaging module of Fig. 7 that is combined with an adhesive member.

The present embodiment provides an optical imaging module 21 that is similar to the optical imaging module 11 of the 1st embodiment, and the optical imaging module 21 can be arranged in a camera module (not shown) similar to the camera module 1 of the 1st embodiment.

The optical imaging module 21 has an optical axis 210 and includes an imaging lens assembly 211, an optical path folding element 212 and a light-blocking element 213.

The imaging lens assembly 211 includes at least one optical lens element 2111. Please be noted that the features of the imaging lens assembly 211, such as the number and the shape of the at least one optical lens element 2111, are not intended to restrict the present disclosure, and thus the profile of the at least one optical lens element 2111 is only partially depicted in the drawings for preventing obscuring the present disclosure.

The optical path folding element 212 is disposed at an image side of the imaging lens assembly 211. The optical axis 210 sequentially travels through the imaging lens assembly 211, the optical path folding element 212 and the light-blocking element 213, and the optical axis 210 is deflected by the optical reflective surface 2123 of the optical path folding element 212 during the traveling in the optical path folding element 212.

The light-blocking element 213 and the optical reflective surface 2123 of the optical path folding element 212 are disposed opposite to each other. The light-blocking element 213 includes an interval area 2131, a fixed area 2132 and a cut opening 2133. The interval area 2131 maintains a distance from the optical path folding element 212, and the interval area 2131 and the optical reflective surface 2123 of the optical path folding element 212 form an air slit (not numbered) therebetween. In the fixed area 2132, there is an adhesive member AM disposed thereon for fixing the light-blocking element 213 to the optical path folding element 212 and providing physical abutting between the light-blocking element 213 and the optical path folding element 212. Further, the air slit is not sealed by any medium other than the adhesive member AM at one side thereof so as to be in air communication with outside. The cut opening 2133 is an open notch. The cut opening 2133 corresponds to the optical reflective surface 2123, and the cut opening 2133 is connected to the interval area 2131.

When a width of the air slit is d, and a thickness of the light-blocking element 213 is t, the following conditions are satisfied: d = 0.010 [mm]; t = 0.029 [mm]; and d/t = 0.345.

When a height of the optical path folding element 212 along a direction of the optical axis 210 of the optical imaging module 21 is H, the following condition is satisfied: H = 2.585 [mm].

When an area of the light-blocking element 213 corresponding to the air slit is Aa, an area of the fixed area 2132 of the light-blocking element 213 coated with the adhesive member AM is Ab, and a total area of the light-blocking element 213 is As, the following conditions are satisfied: Aa = 9.69 [mm$^2$]; Ab = 8.79 [mm$^2$]; As = 22.64 [mm$^2$]; Aa/As = 0.428; and Ab/As = 0.388.

### 3rd Embodiment

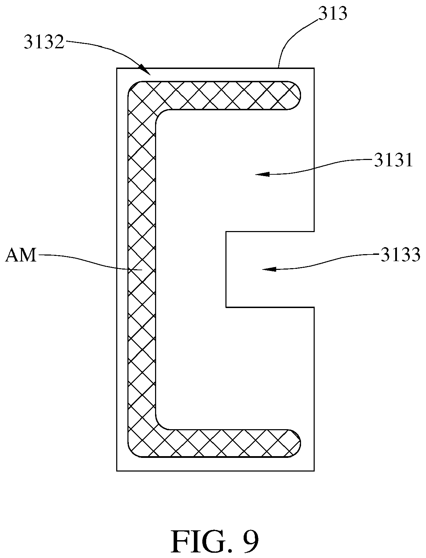

Please refer to Fig. 9, which is a front view of a light-blocking element according to the 3rd embodiment of the present disclosure that is combined with an adhesive member.

The present embodiment provides a light-blocking element 313 that is similar to the light-blocking element 113 of the 1st embodiment, the light-blocking element 313 can be arranged in an optical imaging module (not shown) that is similar to the optical imaging module 11 of the 1st embodiment and also has an optical axis (not shown), and the light-blocking element 313 can also be arranged in a camera module (not shown) similar to the camera module 1 of the 1st embodiment.

The light-blocking element 313 is configured to be disposed opposite to the optical reflective surface of the optical path folding element (not shown). The light-blocking element 313 includes an interval area 3131, a fixed area 3132 and a cut opening 3133. The interval area 3131 is configured to maintain a distance from the optical path folding element, and the interval area 3131 is configured to collaborate with the optical reflective surface of the optical path folding element to form an air slit (not numbered) therebetween. In the fixed area 3132, there is an adhesive member AM disposed thereon for fixing the light-blocking element 313 to the optical path folding element and providing physical abutting between the light-blocking element 313 and the optical path folding element. Further, the air slit is not sealed by any medium other than the adhesive member AM at one side thereof so as to be in air communication with outside. The cut opening 3133 is an open notch. The cut opening 3133 is configured to correspond to the optical reflective surface, and the cut opening 3133 is connected to the interval area 3131.

When a width of the air slit is d, and a thickness of the light-blocking element 313 is t, the following conditions are satisfied: d = 0.100 [mm]; t = 0.020 [mm]; and d/t = 5.000.

When a height of the optical path folding element along a direction of the optical axis of the optical imaging module is H, the following condition is satisfied: H = 2.724 [mm].

When an area of the light-blocking element 313 corresponding to the air slit is Aa, an area of the fixed area 3132 of the light-blocking element 313 coated with the adhesive member AM is Ab, and a total area of the light-blocking element 313 is As, the following conditions are satisfied: Aa = 17.36 [mm$^2$]; Ab = 7.20 [mm$^2$]; As = 28.71 [mm$^2$]; Aa/As = 0.605; and Ab/As = 0.251.

### 4th Embodiment

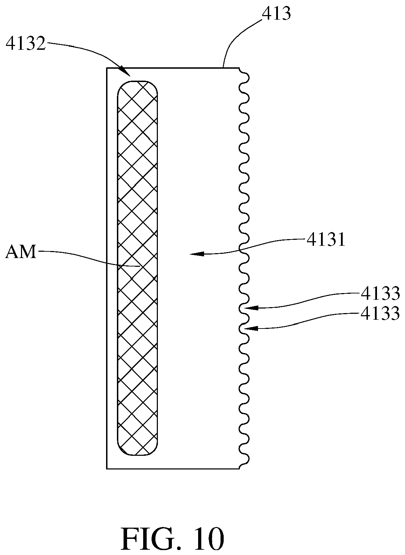

Please refer to Fig. 10, which is a front view of a light-blocking element according to the 4th embodiment of the present disclosure that is combined with an adhesive member.

The present embodiment provides a light-blocking element 413 that is similar to the light-blocking element 113 of the 1st embodiment, the light-blocking element 413 can be arranged in an optical imaging module (not shown) that is similar to the optical imaging module 11 of the 1st embodiment and also has an optical axis (not shown), and the light-blocking element 413 can also be arranged in a camera module (not shown) similar to the camera module 1 of the 1st embodiment.

The light-blocking element 413 is configured to be disposed opposite to the optical reflective surface of the optical path folding element (not shown). The light-blocking element 413 includes an interval area 4131, a fixed area 4132 and a plurality of cut openings 4133. The interval area 4131 is configured to maintain a distance from the optical path folding element, and the interval area 4131 is configured to collaborate with the optical reflective surface of the optical path folding element to form an air slit (not numbered) therebetween. In the fixed area 4132, there is an adhesive member AM disposed thereon for fixing the light-blocking element 413 to the optical path folding element and providing physical abutting between the light-blocking element 413 and the optical path folding element. Further, the air slit is not sealed by any medium other than the adhesive member AM at three sides thereof so as to be in air communication with outside. The cut openings 4133 are open notches arranged at one side of the light-blocking element 413, such that the side of the light-blocking element 413 has a zigzag-like appearance. The cut openings 4133 are configured to correspond to the optical reflective surface, and the cut openings 4133 are connected to the interval area 4131.

When a width of the air slit is d, and a thickness of the light-blocking element 413 is t, the following conditions are satisfied: d = 0.015 [mm]; t = 0.035 [mm]; and d/t = 0.428.

When a height of the optical path folding element along a direction of the optical axis of the optical imaging module is H, the following condition is satisfied: H = 2.724 [mm].

When an area of the light-blocking element 413 corresponding to the air slit is Aa, an area of the fixed area 4132 of the light-blocking element 413 coated with the adhesive member AM is Ab, and a total area of the light-blocking element 413 is As, the following conditions are satisfied: Aa = 13.97 [mm$^2$]; Ab = 5.9 [mm$^2$]; As = 22.14 [mm$^2$]; Aa/As = 0.631; and Ab/As = 0.266.

### 5th Embodiment

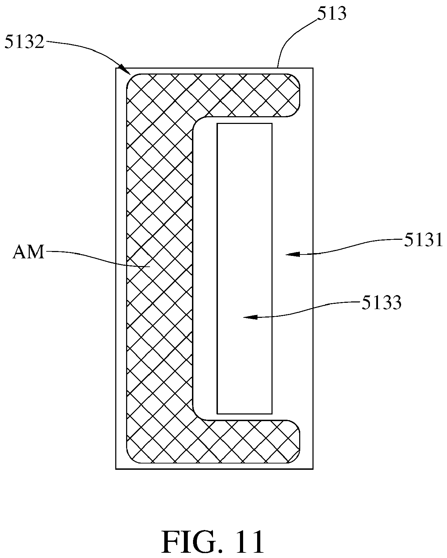

Please refer to Fig. 11, which is a front view of a light-blocking element according to the 5th embodiment of the present disclosure that is combined with an adhesive member.

The present embodiment provides a light-blocking element 513 that is similar to the light-blocking element 113 of the 1st embodiment, the light-blocking element 513 can be arranged in an optical imaging module (not shown) that is similar to the optical imaging module 11 of the 1st embodiment and also has an optical axis (not shown), and the light-blocking element 513 can also be arranged in a camera module (not shown) similar to the camera module 1 of the 1st embodiment.

The light-blocking element 513 is configured to be disposed opposite to the optical reflective surface of the optical path folding element (not shown). The light-blocking element 513 includes an interval area 5131, a fixed area 5132 and a cut opening 5133. The interval area 5131 is configured to maintain a distance from the optical path folding element, and the interval area 5131 is configured to collaborate with the optical reflective surface of the optical path folding element to form an air slit (not numbered) therebetween. In the fixed area 5132, there is an adhesive member AM disposed thereon for fixing the light-blocking element 513 to the optical path folding element and providing physical abutting between the light-blocking element 513 and the optical path folding element. Further, the air slit is not sealed by any medium other than the adhesive member AM at one side thereof so as to be in air communication with outside. The cut opening 5133 is a closed hole. The cut opening 5133 is configured to correspond to the optical reflective surface, and the cut opening 5133 is connected to the interval area 5131.

When a width of the air slit is d, and a thickness of the light-blocking element 513 is t, the following conditions are satisfied: d = 0.006 [mm]; t = 0.029 [mm]; and d/t = 0.207.

When a height of the optical path folding element along a direction of the optical axis of the optical imaging module is H, the following condition is satisfied: H = 2.585 [mm].

When an area of the light-blocking element 513 corresponding to the air slit is Aa, an area of the fixed area 5132 of the light-blocking element 513 coated with the adhesive member AM is Ab, and a total area of the light-blocking element 513 is As, the following conditions are satisfied: Aa = 8.23 [mm$^2$]; Ab = 13.64 [mm$^2$]; As = 25.07 [mm$^2$]; Aa/As = 0.328; and Ab/As = 0.544.

### 6th Embodiment

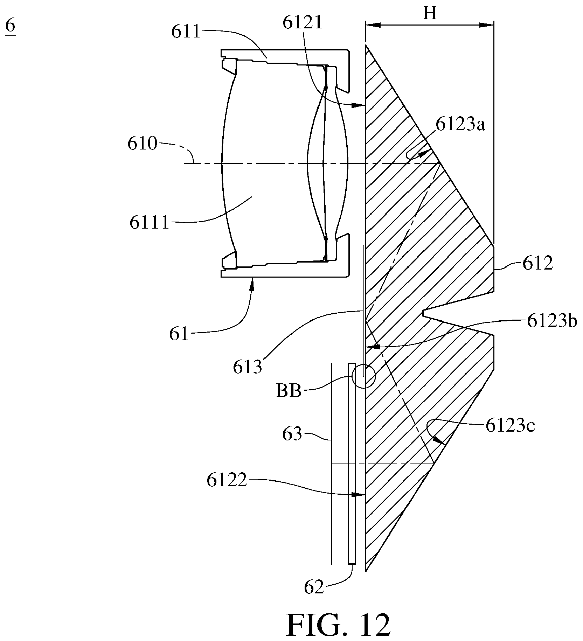

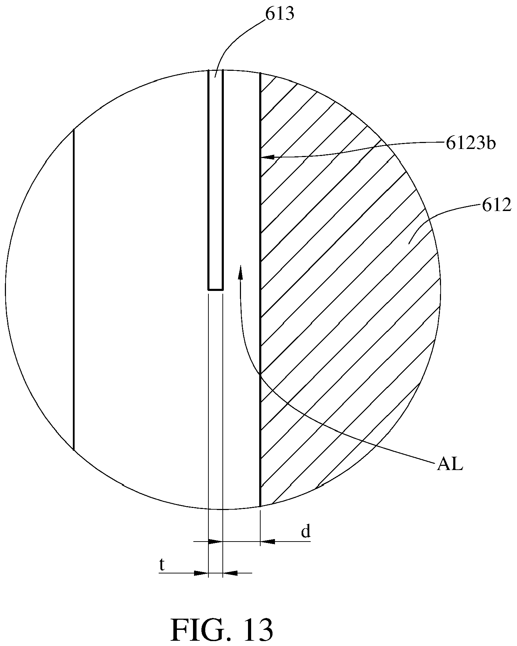

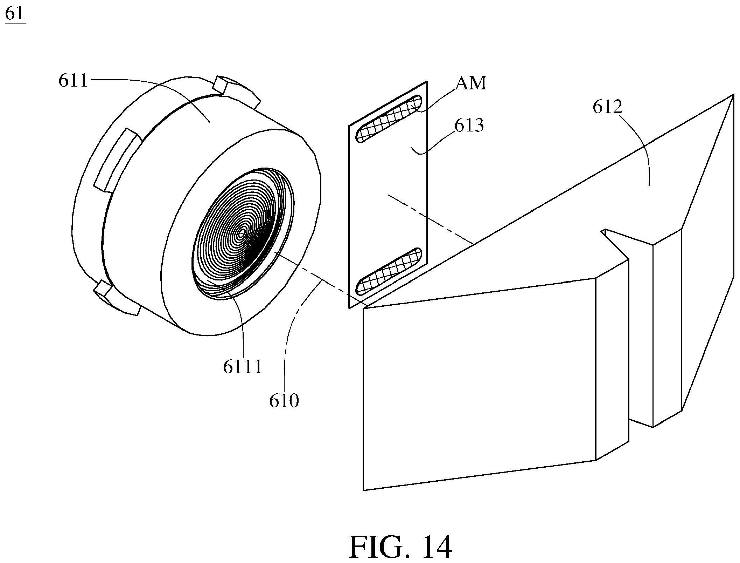

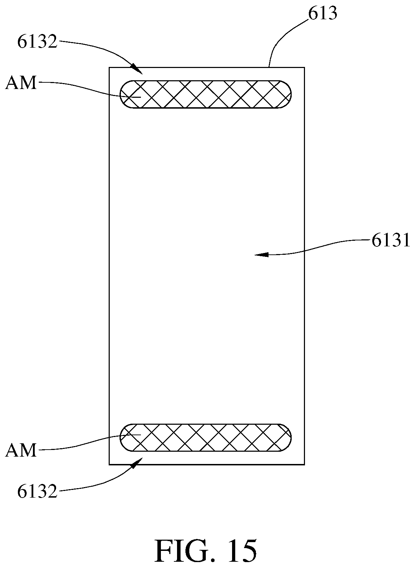

Please refer to Fig. 12 to Fig. 15, where Fig. 12 is a cross-sectional view of a camera module according to the 6th embodiment of the present disclosure, Fig. 13 is an enlarged view of BB region of an optical imaging module of the camera module of Fig. 12, Fig. 14 is an exploded view of the optical imaging module of the camera module of Fig. 12, and Fig. 15 is a front view of a light-blocking element of the optical imaging module of Fig. 14 that is combined with an adhesive member.

The present embodiment provides a camera module 6 including an optical imaging module 61, a filter 62 and an image sensor 63. The filter 62 is disposed between the optical imaging module 61 and the image sensor 63. The image sensor 63 is disposed on an image surface (not numbered) of the optical imaging module 61. The optical imaging module 61 has an optical axis 610 and includes an imaging lens assembly 611, an optical path folding element 612 and a light-blocking element 613.

The imaging lens assembly 611 includes at least one optical lens element 6111. Please be noted that the features of the imaging lens assembly 611, such as the number and the shape of the at least one optical lens element 6111, are not intended to restrict the present disclosure, and thus the profile of the at least one optical lens element 6111 is only partially depicted in the drawings for preventing obscuring the present disclosure.

The optical path folding element 612 is disposed at an image side of the imaging lens assembly 611. The optical path folding element 612 has a light incident surface 6121, a light exiting surface 6122, and three optical reflective surfaces 6123a, 6123b, 6123c. The optical reflective surfaces 6123a and 6123c include, for example, high-reflective coatings for reflecting imaging light, and the optical reflective surface 6123b is, for example, an optical total reflection surface for totally internally reflecting imaging light. As such, the optical axis 610 can travel through the at least one optical lens element 6111 and the light incident surface 6121 of the imaging lens assembly 611 then to be deflected three times sequentially at the optical reflective surfaces 6123a, 6123b, 6123c, and then the optical axis 610 can exit the optical imaging module 61 from the light exiting surface 6122 to reach the image sensor 63 via the filter 62.

The light-blocking element 613 and the optical reflective surface 6123b of the optical path folding element 612 are disposed opposite to each other. The light-blocking element 613 includes an interval area 6131 and a fixed area 6132. The interval area 6131 maintains a distance from the optical path folding element 612, and the interval area 6131 and the optical reflective surface 6123b of the optical path folding element 612 form an air slit AL therebetween. In the fixed area 6132, there is an adhesive member AM disposed thereon for fixing the light-blocking element 613 to the optical path folding element 612 and providing physical abutting between the light-blocking element 613 and the optical path folding element 612. Further, the air slit AL is not sealed by any medium other than the adhesive member AM at a position where the light-blocking element 613 is close to the light exiting surface 6122 so as to be in air communication with outside.

When a width of the air slit AL is d, and a thickness of the light-blocking element 613 is t, the following conditions are satisfied: d = 0.06 [mm]; t = 0.023 [mm]; and d/t = 2.609.

When a height of the optical path folding element 612 along a direction of the optical axis 610 of the optical imaging module 61 is H, the following condition is satisfied: H = 3.830 [mm].

When an area of the light-blocking element 613 corresponding to the air slit AL is Aa, an area of the fixed area 6132 of the light-blocking element 613 coated with the adhesive member AM is Ab, and a total area of the light-blocking element 613 is As, the following conditions are satisfied: Aa = 24.93 $[mm^2]$; Ab = 3.63 $[mm^2]$; As = 31.34 $[mm^2]$; Aa/As = 0.795; and Ab/As = 0.116.

**7th Embodiment**

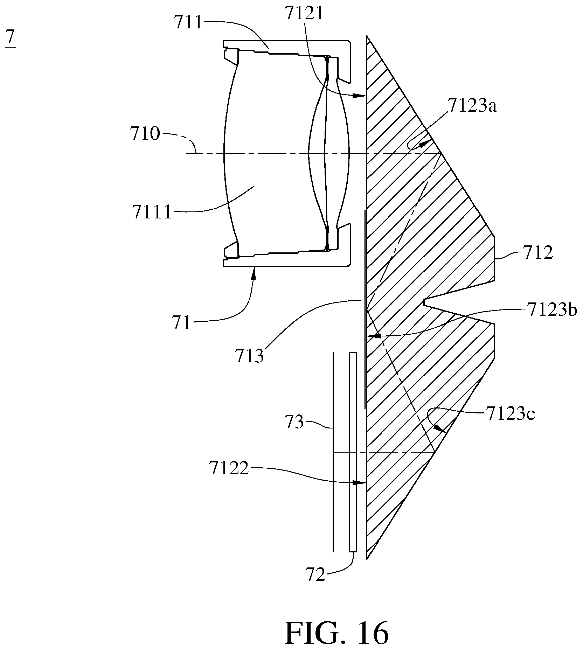

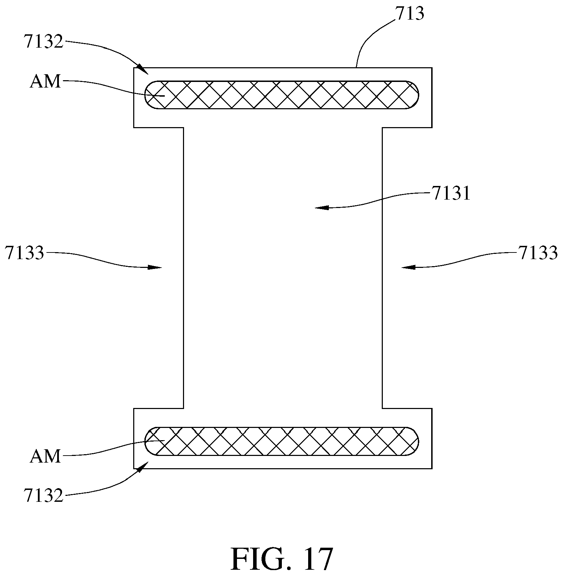

Please refer to Fig. 16 to Fig. 17, where Fig. 16 is a cross-sectional view of a camera module according to the 7th embodiment of the present disclosure, and Fig. 17 is a front view of a light-blocking element of an optical imaging module of the camera module of Fig. 16.

The present embodiment provides a camera module 7 including an optical imaging module 71, a filter 72 and an image sensor 73. The filter 72 is disposed between the optical imaging module 71 and the image sensor 73. The image sensor 73 is disposed on an image surface (not numbered) of the optical imaging module 71. The optical imaging module 71 has an optical axis 710 and includes an imaging lens assembly 711, an optical path folding element 712 and a light-blocking element 713.

The imaging lens assembly 711 includes at least one optical lens element 7111. Please be noted that the features of the imaging lens assembly 711, such as the number and the shape of the at least one optical lens element 7111, are not intended to restrict the present disclosure, and thus the profile of the at least one optical lens element 7111 is only partially depicted in the drawings for preventing obscuring the present disclosure.

The optical path folding element 712 is disposed at an image side of the imaging lens assembly 711. The optical path folding element 712 has a light incident surface 7121, a light exiting surface 7122, and three optical reflective surfaces 7123a, 7123b, 7123c. The optical reflective surfaces 7123a and 7123c include, for example, high-reflective coatings for reflecting imaging light, and the optical reflective surface 7123b is, for example, an optical total reflection surface for totally internally reflecting imaging light. As such, the optical axis 710 can travel through the at least one optical lens element 7111 and the light incident surface 7121 of the imaging lens assembly 711 then to be deflected three times sequentially at the optical reflective surfaces 7123a, 7123b, 7123c, and then the optical axis 710 can exit the optical imaging module 71 from the light exiting surface 7122 to reach the image sensor 73 via the filter 72.

The light-blocking element 713 and the optical reflective surface 7123b of the optical path folding element 712 are disposed opposite to each other. The light-blocking element 713 includes an interval area 7131, two fixed areas 7132 and two cut openings 7133. The interval area 7131 maintains a distance from the optical path folding element 712, and the interval area 7131 and the optical reflective surface 7123b of the optical path folding element 712 form an air slit (not numbered) therebetween. In each fixed area 7132, there is an adhesive member AM disposed thereon for fixing the light-blocking element 713 to the optical path folding element 712 and providing physical abutting between the light-blocking element 713 and the optical path folding element 712. Further, the air slit is not sealed by any medium other than the adhesive member AM at a position where the light-blocking element 713 is close to the light incident surface 7121 and the light exiting surface 7122 so as to be in air communication with outside. The cut openings 7133 are open notches. The cut openings 7133 correspond to the optical reflective surface 7123b, and the cut openings 7133 are connected to the interval area 7131.

When a width of the air slit is d, and a thickness of the light-blocking element 713 is t, the following conditions are satisfied: d = 0.035 [mm]; t = 0.035 [mm]; and d/t = 1.000.

When a height of the optical path folding element 712 along a direction of the optical axis 710 of the optical imaging module 71 is H, the following condition is satisfied: H = 3.830 [mm].

When an area of the light-blocking element 713 corresponding to the air slit is Aa, an area of the fixed area 7132 of the light-blocking element 713 coated with the adhesive member AM is Ab, and a total area of the light-blocking element 713 is As, the following conditions are satisfied: Aa = 26.98 [mm$^2$]; Ab = 5.91 [mm$^2$]; As = 36.80 [mm$^2$]; Aa/As = 0.733; and Ab/As = 0.161.

### 8th Embodiment

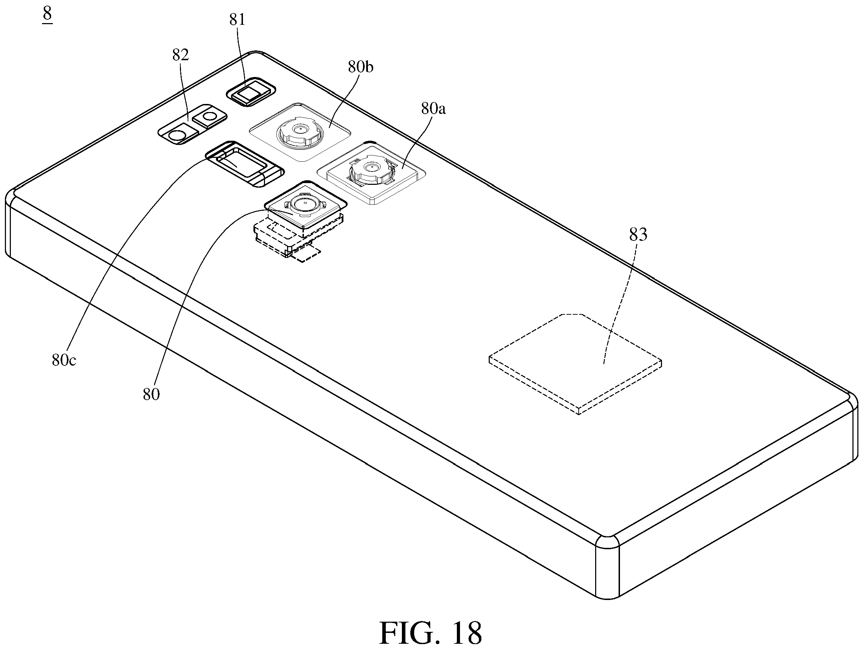

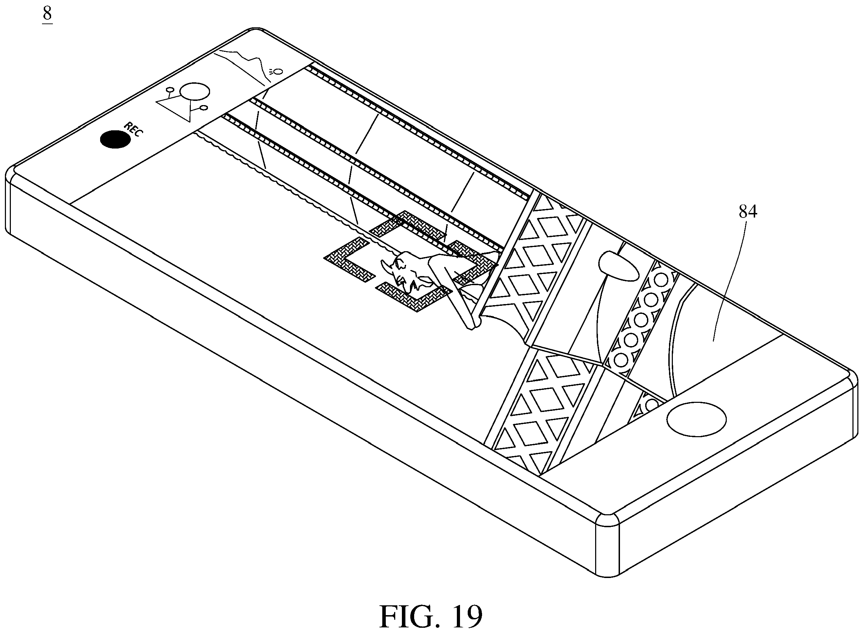

Please refer to Fig. 18 to Fig. 19, where Fig. 18 is one perspective view of an electronic device according to the 8th embodiment of the present disclosure, and Fig. 19 is another perspective view of the electronic device in Fig. 18.

In this embodiment, an electronic device 8 is a smartphone including a plurality of camera modules, a flash module 81, a focus assist module 82, an image signal processor 83, a display module (user interface) 84 and an image software processor (not shown).

The camera modules include an ultra-wide-angle camera module 80a, a high pixel camera module 80b, a telephoto camera module 80c and a telephoto camera module 80. Moreover, the camera module 80 includes one of the camera modules 1, 6, 7 of the present disclosure.

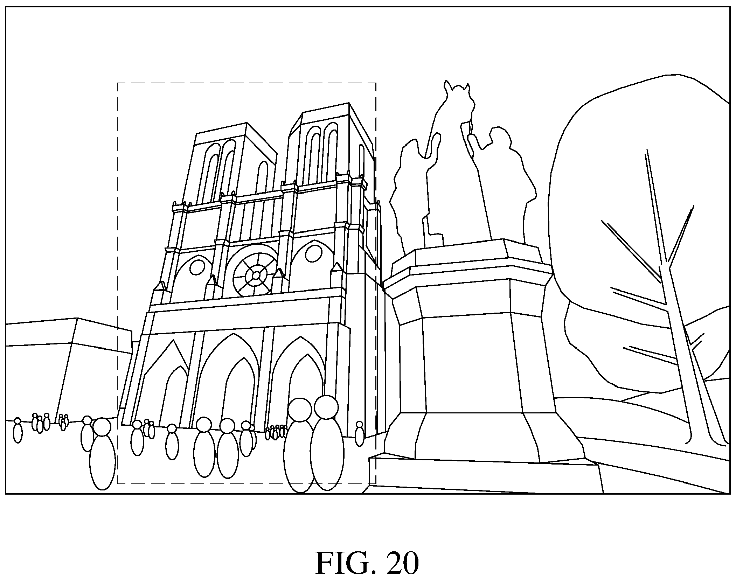

The image captured by the ultra-wide-angle camera module 80a enjoys a feature of multiple imaged objects. Fig. 20 is an image captured by the ultra-wide-angle camera module 80a. Moreover, the maximum field of view (FOV) of the camera module 80a corresponds to the viewing angle in Fig. 20.

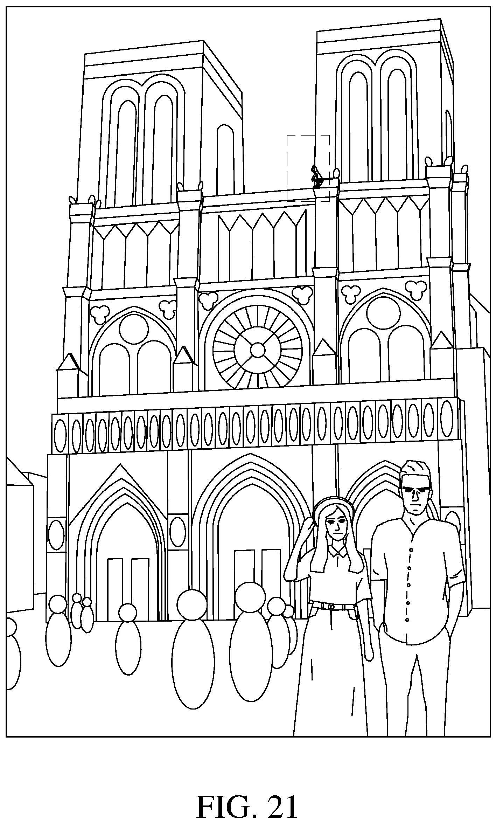

The image captured by the high pixel camera module 80b enjoys a feature of high resolution and less distortion, and the high pixel camera module 80b can capture part of the image in Fig. 20. Fig. 21 is an image captured by the high pixel camera module 80b.

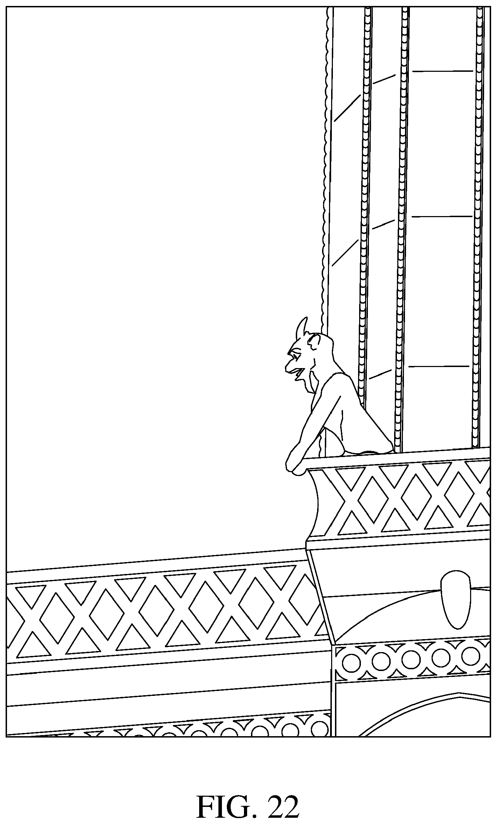

The image captured by the telephoto camera module 80c enjoys a feature of high optical magnification, and the telephoto camera module 80c can capture part of the image in Fig. 21. Fig. 22 is an image captured by the telephoto camera module 80c.

When a user captures images of an object, the light rays converge in the ultra-wide-angle camera module 80a, the high pixel camera module 80b, the telephoto camera module 80c or the telephoto camera module 80 to generate images, and the flash module 81 is activated for light supplement. The focus assist module 82 detects the object distance of the imaged object to achieve fast auto focusing. The image signal processor 83 is configured to optimize the captured image to improve image quality and provided zooming function. The light beam emitted from the focus assist module 82 can be either conventional infrared or laser. The display module 84 can include a touch screen, and the user is able to interact with the display module 84 to adjust the angle of view and switch between different camera modules, and the image software processor having multiple functions to capture images and complete image processing. Alternatively, the user may capture images via a physical button. The image processed by the image software processor can be displayed on the display module 84.

### 9th Embodiment

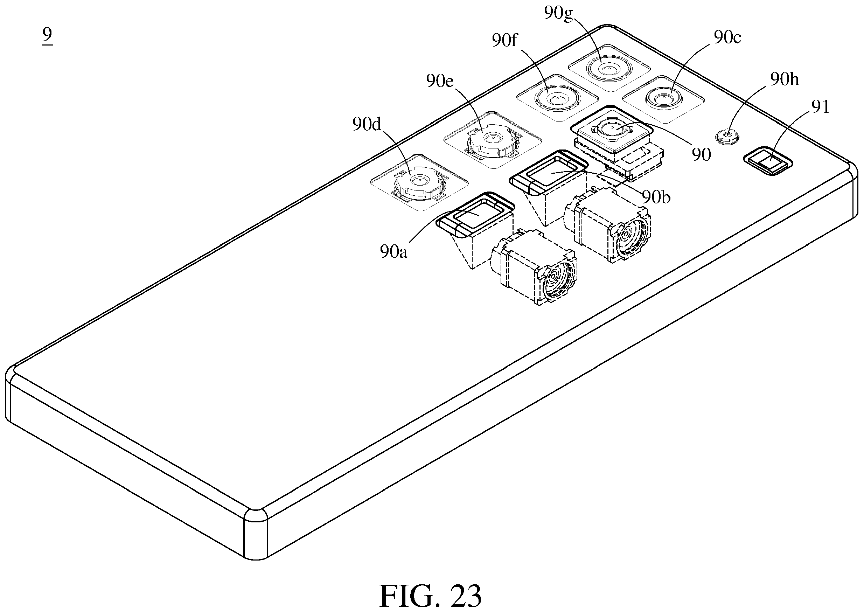

Please refer to Fig. 23, which is one perspective view of an electronic device according to the 9th embodiment of the present disclosure.

In this embodiment, an electronic device 9 is a smartphone including a camera module 90, a camera module 90a, a camera module 90b, a camera module 90c, a camera module 90d, a camera module 90e, a camera module 90f, a camera module 90g, a camera module 90h, a flash module 91, an image signal processor, a display module and an image software processor (not shown). The camera module 90, the camera module 90a, the camera module 90b, the camera module 90c, the camera module 90d, the camera module 90e, the camera module 90f, the camera module 90g and the camera module 90h are disposed on the same side of the electronic device 9, while the display module is disposed on the opposite side of the electronic device 9. Moreover, the camera module 90 includes one of the camera modules 1, 6, 7 of the present disclosure.

The camera module 90 is a telephoto camera module, the camera module 90a is a telephoto camera module, the camera module 90b is a telephoto camera module, the camera module 90c is a telephoto camera module, the camera module 90d is a wide-angle camera module, the camera module 90e is a wide-angle camera module, the camera module 90f is an ultra-wide-angle camera module, the camera module 90g is an ultra-wide-angle camera module, and the camera module 90h is a ToF (time of flight) camera module. In this embodiment, the camera module 90, the camera module 90a, the camera module 90b, the camera module 90c, the camera module 90d, the camera module 90e, the camera module 90f and the camera module 90g have different fields of view, such that the electronic device 9 can have various magnification ratios so as to meet the requirement of optical zoom functionality. In addition, the camera module 90a and the camera module 90b each are a telephoto camera module having a light-folding element configuration. In addition, the camera module 90h can determine depth information of the imaged object. In this embodiment, the electronic device 9 includes a plurality of camera modules 90, 90a, 90b, 90c, 90d, 90e, 90f, 90g, and 90h, but the present disclosure is not limited to the number and arrangement of camera module. When a user captures images of an object, the light rays converge in the camera modules 90, 90a, 90b, 90c, 90d, 90e, 90f, 90g or 90h to generate an image(s), and the flash module 91 is activated for light supplement. Further, the subsequent processes are performed in a manner similar to the abovementioned embodiments, so the details in this regard will not be provided again.

**10th Embodiment**

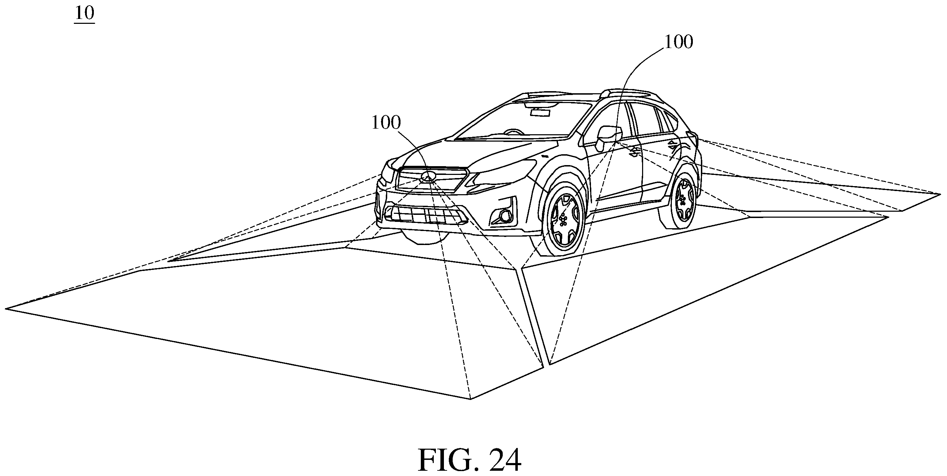

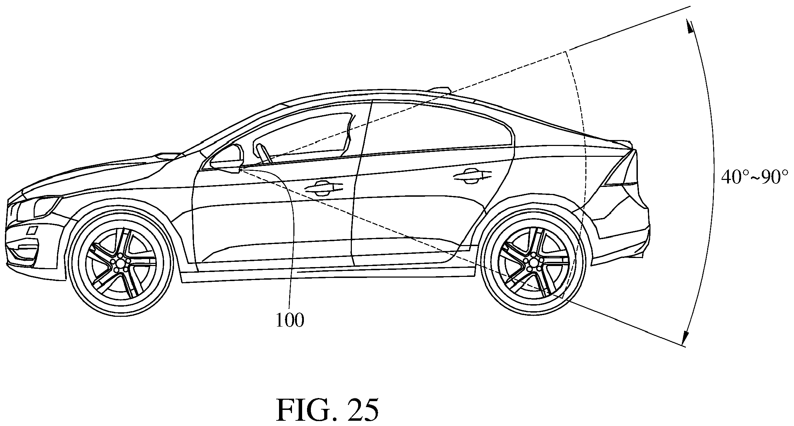

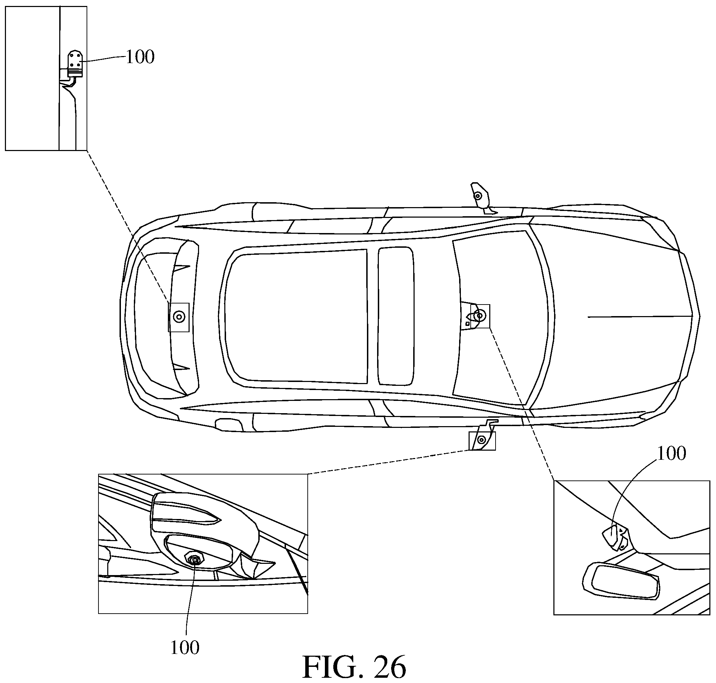

Please refer to Fig. 24 to Fig. 26, where Fig. 24 is a perspective view of an electronic device according to the 10th embodiment of the present disclosure, Fig. 25 is a side view of the electronic device in Fig. 24, and Fig. 26 is a top view of the electronic device in Fig. 24.

In this embodiment, an electronic device 10 is an automobile. The electronic device 10 includes a plurality of automotive camera modules 100, and the camera modules 100, for example, each include one of the camera modules 1, 6, 7 of the present disclosure. The camera modules 100 can be served as, for example, panoramic view car cameras, dashboard cameras and vehicle backup cameras.

As shown in Fig. 24, the camera modules 100 are disposed, for example, around the automobile to capture peripheral images of the automobile, which is favorable for recognizing road conditions outside the automobile so as to achieve an automatic driving assistant. In addition, the image software processor may stitch the peripheral images into a panorama image for the driver's checking every corner surrounding the automobile, thereby favorable for parking and driving.

As shown in Fig. 25, the camera modules 100 are disposed, for example, on the lower portions of the side mirrors. A maximum field of view of each of the camera modules 100 can range from 40 degrees to 90 degrees for capturing images on left and right sides within nearby lane regions.

As shown in Fig. 26, the camera modules 100 are disposed, for example, on the lower portions of the side mirrors and further at the inner sides of the front and rear windshields for providing external information to the driver, and also providing more viewing angles so as to reduce blind spots, thereby improving driving safety.

The smartphones or the automobile in the embodiments are only exemplary for showing the camera modules 1, 6, 7 of the present disclosure installed in an electronic device 8, 9 or 10, and the present disclosure is not limited thereto. The camera modules 1, 6, 7 can be optionally applied to optical systems with a movable focus. Furthermore, the camera modules 1, 6, 7 feature good capability in aberration corrections and high image quality, and can be applied to 3D (three-dimensional) image capturing applications, in products such as digital cameras, mobile devices, digital tablets, smart televisions, network surveillance devices, multi-camera devices, image recognition systems, motion sensing input devices, wearable devices, other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

**Claims**

1. An optical imaging module (11), comprising:

an imaging lens assembly (111), comprising at least one optical lens element (1111); an optical path folding element (112), disposed at an image side of the imaging lens assembly (111), wherein the optical path folding element (112) has a light incident surface (1121), a light exiting surface (1122), and at least one optical reflective surface (1123a); and a light-blocking element (113), disposed opposite to the at least one optical reflective surface (1123a) of the optical path folding element (112), wherein the light-blocking element (113) comprises an interval area (1131) that maintains a distance from the optical path folding element (112); wherein the at least one optical reflective surface (1123a) is an optical total reflection surface that is configured to totally internally reflect imaging light of the optical imaging module (11) in the optical path folding element (112); and wherein the interval area (1131) of the light-blocking element (113) and the optical total reflection surface form an air slit (AL) therebetween.

2. The optical imaging module (11) according to claim 1, wherein the air slit (AL) is in air communication with outside at a position where the light-blocking element (113) is located close to the light exiting surface (1122).

3. The optical imaging module (11) according to claim 1, wherein the light-blocking element (113) further comprises a fixed area (1132), an adhesive member (AM) is disposed on the fixed area (1132), and the adhesive member (AM) is configured to fix the light-blocking element (113) to the optical path folding element (112).

**4.** The optical imaging module (11) according to claim 3, wherein an area of the fixed area (1132) of the light-blocking element (113) coated with the adhesive member (AM) is Ab, a total area of the light-blocking element (113) is As, and the following condition is satisfied:

$$0.05 < Ab/As < 0.65.$$

**5.** The optical imaging module (11) according to claim 4, wherein the area of the fixed area (1132) of the light-blocking element (113) coated with the adhesive member (AM) is Ab, the total area of the light-blocking element (113) is As, and the following condition is satisfied:

$$0.10 < Ab/As < 0.60.$$

**6.** The optical imaging module (11) according to claim 1, wherein a height of the optical path folding element (112) along a direction of an optical axis (110) of the optical imaging module (11) is H, and the following condition is satisfied:

$$1\ [mm] < H < 5\ [mm].$$

**7.** The optical imaging module (11) according to claim 1, wherein a width of the air slit (AL) is d, and the following condition is satisfied:

$$0.002\ [mm] < d < 0.10\ [mm].$$

**8.** The optical imaging module (11) according to claim 7, wherein the width of the air slit (AL) is d, and the following condition is satisfied:

$$0.005\ [mm] < d < 0.07\ [mm].$$

**9.** The optical imaging module (11) according to claim 1, wherein a width of the air slit (AL) is d, a thickness of the light-blocking element (113) is t, and the following condition is satisfied:

$$0.03 < d/t < 7.50.$$

**10.** The optical imaging module (11) according to claim 1, wherein the light-blocking element (113) and the optical path folding element (112) physically abut on each other.

**11.** The optical imaging module (21) according to claim 1, wherein the light-blocking element (213) further comprises a cut opening (2133) that corresponds to the at least one optical reflective surface (2123), and the cut opening (2133) is connected to the interval area (2131).

**12.** The optical imaging module (11) according to claim 1, wherein an area of the light-blocking element (113) corresponding to the air slit (AL) is Aa, a total area of the light-blocking element (113) is As, and the following condition is satisfied:

$$0.10 < Aa/As < 0.90.$$

**13.** The optical imaging module (11) according to claim 12, wherein the area of the light-blocking element (113) corresponding to the air slit (AL) is Aa, the total area of the light-blocking element (113) is As, and the following condition is satisfied:

$$0.15 < Aa/As < 0.85.$$

**14.** An optical imaging module (11), comprising:

an imaging lens assembly (111), comprising at least one optical lens element (1111);
an optical path folding element (112), disposed at an image side of the imaging lens assembly (111), wherein the optical path folding element (112) has a light incident surface (1121), a light exiting surface (1122), and at least one optical reflective surface (1123a); and
a light-blocking element (113), disposed opposite to the at least one optical reflective surface (1123a) of the optical path folding element (112), wherein the light-blocking element (113) comprises an interval area (1131) that maintains a distance from the optical path folding element (112);
wherein the light-blocking element (113) further comprises a fixed area (1132), an adhesive member (AM) is disposed on the fixed area (1132), and the adhesive member (AM) is configured to fix the light-blocking element (113) to the optical path folding element (112);
wherein the interval area (1131) of the light-blocking element (113) and the at least one optical reflective surface (1123a) of the optical path folding element (112) form an air slit (AL) therebetween.

**15.** The optical imaging module (11) according to claim 14, wherein an area of the fixed area (1132) of the light-blocking element (113) coated with the adhesive member (AM) is Ab, a total area of the light-blocking element (113) is As, and the following condition is satisfied:

$$0.05 < Ab/As < 0.65.$$

**16.** The optical imaging module (11) according to claim 15, wherein the area of the fixed area (1132) of the light-blocking element (113) coated with the adhesive member (AM) is Ab, the total area of the light-blocking element (113) is As, and the following condition is satisfied:

$$0.10 < Ab/As < 0.60.$$

**17.** The optical imaging module (11) according to claim 14, wherein a height of the optical path folding element (112) along a direction of an optical axis (110) of the optical imaging module (11) is H, and the following condition is satisfied:

$$1\ [mm] < H < 5\ [mm].$$

**18.** The optical imaging module (11) according to claim 14, wherein a width of the air slit (AL) is d, a thickness of the light-blocking element (113) is t, and the following condition is satisfied:

$$0.03 < d/t < 7.50.$$

**19.** The optical imaging module (21) according to claim 14, wherein the light-blocking element (213) further comprises a cut opening (2133) that corresponds to the at least one optical reflective surface (2123), and the cut opening (2133) is connected to the interval area (2131).

**20.** The optical imaging module (11) according to claim 14, wherein the air slit (AL) is in air communication with outside at a position where the light-blocking element (113) is located close to the light exiting surface (1122).

**21.** The optical imaging module (11) according to claim 14, wherein an area of the light-blocking element (113) corresponding to the air slit (AL) is Aa, a total area of the light-blocking element (113) is As, and the following condition is satisfied:

$$0.10 < Aa/As < 0.90.$$

**22.** The optical imaging module (11) according to claim 21, wherein the area of the light-blocking element (113) corresponding to the air slit (AL) is Aa, the total area of the light-blocking element (113) is As, and the following condition is satisfied:

$$0.15 < Aa/As < 0.85.$$

**23.** An optical imaging module (11), comprising:

an imaging lens assembly (111), comprising at least one optical lens element (1111);
an optical path folding element (112), disposed at an image side of the imaging lens assembly (111), wherein the optical path folding element (112) has a light incident surface (1121), a light exiting surface (1122), and at least one optical reflective surface (1123a); and
a light-blocking element (113), disposed opposite to the at least one optical reflective surface (1123a) of the optical path folding element (112), wherein the light-blocking element (113) comprises an interval area (1131) that maintains a distance from the optical path folding element (112);
wherein the interval area (1131) of the light-blocking element (113) and the at least one optical reflective surface (1123a) of the optical path folding element (112) form an air slit (AL) therebetween, a width of the air slit (AL) is d, and the following condition is satisfied:

$$0.002\ [mm] < d < 0.10\ [mm].$$

**24.** The optical imaging module (11) according to claim 23, wherein the width of the air slit (AL) is d, and the following condition is satisfied:

$$0.005\ [mm] < d < 0.07\ [mm].$$

**25.** The optical imaging module (11) according to claim 24, wherein the width of the air slit (AL) is d, and the following condition is satisfied:

$$0.007\ [mm] < d < 0.04\ [mm].$$

**26.** The optical imaging module (11) according to claim 23, wherein the width of the air slit (AL) is d, a thickness of the light-blocking element (113) is t, and the following condition is satisfied:

$$0.03 < d/t < 7.50.$$

**27.** The optical imaging module (11) according to claim 23, wherein the light-blocking element (113) further comprises a fixed area (1132), an adhesive member (AM) is disposed on the fixed area (1132), and the adhesive member (AM) is configured to fix the light-blocking element (113) to the optical path folding element (112).

**28.** The optical imaging module (11) according to claim 27, wherein an area of the fixed area (1132) of the light-blocking element (113) coated with the adhesive member (AM) is Ab, a total area of the light-blocking element (113) is As, and the following condition is satisfied:

$$0.05 < Ab/As < 0.65.$$

**29.** The optical imaging module (11) according to claim 28, wherein the area of the fixed area (1132) of the light-blocking element (113) coated with the adhesive member (AM) is Ab, the total area of the light-blocking element (113) is As, and the following condition is satisfied:

$$0.10 < Ab/As < 0.60.$$

**30.** The optical imaging module (11) according to claim 23, wherein a height of the optical path folding element (112) along a direction of an optical axis (110) of the optical imaging module (11) is H, and the following condition is satisfied:

$$1\ [mm] < H < 5\ [mm].$$

**31.** The optical imaging module (21) according to claim 23, wherein the light-blocking element (213) further comprises a cut opening (2133) that corresponds to the at least one optical reflective surface (2123), and the cut opening (2133) is connected to the interval area (2131).

**32.** The optical imaging module (11) according to claim 23, wherein the air slit (AL) is in air communication with outside at a position where the light-blocking element (113) is located close to the light exiting surface (1122).

**33.** The optical imaging module (11) according to claim 23, wherein an area of the light-blocking element (113) corresponding to the air slit (AL) is Aa, a total area of the light-blocking element (113) is As, and the following condition is satisfied:

$$0.10 < Aa/As < 0.90.$$

**34.** The optical imaging module (11) according to claim 33, wherein the area of the light-blocking element (113) corresponding to the air slit (AL) is Aa, the total area of the light-blocking element (113) is As, and the following condition is satisfied:

$$0.15 < Aa/As < 0.85.$$

**35.** A camera module (1), comprising:

the optical imaging module (11) of claim 23; and an image sensor (13) disposed on an image surface of the optical imaging module (11).

**36.** An electronic device (8), comprising:

the camera module (1) of claim 35.

FIG. 1

EP 4 428 611 A1

FIG. 2

FIG. 3

FIG. 4

FIG. 5

EP 4 428 611 A1

EP 4 428 611 A1

FIG. 6

EP 4 428 611 A1

21

212
2123
AM
213
211
210
2111

FIG. 7

FIG. 8

EP 4 428 611 A1

EP 4 428 611 A1

**FIG. 9**

EP 4 428 611 A1

FIG. 10

EP 4 428 611 A1

**FIG. 11**

FIG. 12

FIG. 13

EP 4 428 611 A1

61

611

AM

612

613

6111

610

FIG. 14

EP 4 428 611 A1

FIG. 15

FIG. 16

FIG. 17

FIG. 18

EP 4 428 611 A1

FIG. 19

FIG. 20

FIG. 21

FIG. 22

FIG. 23

EP 4 428 611 A1

FIG. 24

EP 4 428 611 A1

40°~90°

100

FIG. 25

FIG. 26

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

**Application Number**

**EP 23 17 2333**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/007603 A1 (NINGBO SUNNY OPOTECH CO LTD [CN]) 13 January 2022 (2022-01-13) | 1-8, 10-13 | INV. G03B11/04 |
| A | * page 5 - page 7 * * pages 10-14; figures 1, 2a, 4, 8, 10, 11 * | 9 | G02B13/00 G03B17/17 G03B30/00 G02B5/04 |
| | ----- | | |
| Y | US 2022/091398 A1 (SMYTH NICHOLAS D [US] ET AL) 24 March 2022 (2022-03-24) * figures 1A, 2A, 3C, 4 * | 1 | |
| | ----- | | |
| Y | EP 3 674 768 A1 (TDK TAIWAN CORP [TW]) 1 July 2020 (2020-07-01) * paragraph [0163]; figures 32, 48, 51, 53 * | 1 | |
| | ----- | | |

**TECHNICAL FIELDS
SEARCHED (IPC)**

G03B
G02B

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:
**see sheet C**

| Place of search | Date of completion of the search | Examiner |
|---|---|---|
| **Munich** | **25 July 2024** | **Rückerl, Ralph** |

EPO FORM 1503 03.82 (P04E07)

Europäisches
Patentamt

European
Patent Office

Office européen
des brevets

**INCOMPLETE SEARCH
SHEET C**

**Claim(s) completely searchable:**
    1-13

**Claim(s) not searched:**
    14-36

**Reason for the limitation of the search:**

In reply to the invitation to indicate the claims on which the search is to be based, the applicant failed to supply the requested indication in due time.
Thus, the search report has been drawn up on the basis of the first independent claim of each category (Rule 62a(1) EPC).

## ANNEX TO THE EUROPEAN SEARCH REPORT
## ON EUROPEAN PATENT APPLICATION NO.

EP 23 17 2333

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2024

| Patent document cited in search report | | | Publication date | Patent family member(s) | | | Publication date |
|---|---|---|---|---|---|---|---|
| WO 2022007603 | A1 | | 13-01-2022 | CN | 113992813 | A | 28-01-2022 |
| | | | | CN | 115769124 | A | 07-03-2023 |
| | | | | WO | 2022007603 | A1 | 13-01-2022 |
| US 2022091398 | A1 | | 24-03-2022 | CN | 114253050 | A | 29-03-2022 |
| | | | | US | 2022091398 | A1 | 24-03-2022 |
| | | | | WO | 2022066953 | A1 | 31-03-2022 |
| EP 3674768 | A1 | | 01-07-2020 | CN | 111381343 | A | 07-07-2020 |
| | | | | CN | 117148535 | A | 01-12-2023 |
| | | | | CN | 117270150 | A | 22-12-2023 |
| | | | | CN | 117289438 | A | 26-12-2023 |
| | | | | CN | 211206920 | U | 07-08-2020 |
| | | | | EP | 3674768 | A1 | 01-07-2020 |
| | | | | EP | 4249969 | A2 | 27-09-2023 |
| | | | | JP | 7417418 | B2 | 18-01-2024 |
| | | | | JP | 2020126231 | A | 20-08-2020 |
| | | | | JP | 2024026635 | A | 28-02-2024 |
| | | | | JP | 2024029190 | A | 05-03-2024 |
| | | | | US | 2020225442 | A1 | 16-07-2020 |
| | | | | US | 2021191068 | A1 | 24-06-2021 |
| | | | | US | 2021191105 | A1 | 24-06-2021 |
| | | | | US | 2022137322 | A1 | 05-05-2022 |
| | | | | US | 2023161131 | A1 | 25-05-2023 |

EPO FORM P0459

For more details about this annex : see Official Journal of the European Patent Office, No. 12/82